(19) Europäisches Patentamt
European Patent Office
Office européen des brevets

(11) **EP 2 716 775 A1**

(12) **EUROPEAN PATENT APPLICATION**
published in accordance with Art. 153(4) EPC

(43) Date of publication:
**09.04.2014 Bulletin 2014/15**

(51) Int Cl.:
**C22B 15/00** *(2006.01)*  **C22B 3/06** *(2006.01)*

(21) Application number: **12793331.5**

(22) Date of filing: **03.05.2012**

(86) International application number:
**PCT/CL2012/000022**

(87) International publication number:
**WO 2012/162851 (06.12.2012 Gazette 2012/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.05.2011 CL 12422011**

(71) Applicant: **Lixivia Ltda.**
**Santiago 7610-661 (BR)**

(72) Inventors:
• **CARTAGENA FAGERSTEÖM, Alejandro**
**Santiago - Código postal 7610-661 (CL)**
• **HECKER CARTES, Christian**
**Concepción - Código postal 4070-417 (CL)**

(74) Representative: **Baños Treceño, Valentín**
**A.A. Manzano Patentes y Marcas, S.L.**
**C/ Embajadores 55, 6° Izda**
**28012 Madrid (ES)**

(54) **OBTAINING A FERRIC NITRATE REAGENT IN SITU FROM A COPPER RAFFINATE SOLUTION IN A HYDROMETALLURGICAL COPPER PROCESS**

(57) The invention relates to a process for producing a chemical reagent that is soluble in neutral waters, acid waters and in process solutions, in order to aid and improve the oxidation and leaching of cooper sulfides. The process comprises the following steps: diverting part of an aqueous current form a process solution; concentrating the iron (II) from said current, oxidizing same to form a ferrous nitrate solution having high redox potential, and storing the latter to measure out the amount needed for the leaching process. The system for preparing the reagent includes the following; concentrating an aqueous solution, oxidizing same and transforming the ferrous sulfate into ferrous nitrate, containing the concentrated ferrous nitrate, distributing and measuring out the reagent in the current fed to the leaching pond. The reagent, wich includes ferrous nitrate, is incorporated in the irrigation of copper sulfide leaching basins.

**Fig.1**

EP 2 716 775 A1

**Description**

**SCOPE**

This invention refers to an on-site preparation process of a stable reagent as solvent and oxidizing agent, based on an aqueous current of copper leaching solution containing iron (II), particularly copper sulfide species such as: Chalcopyrite, Covellite, Chalcocite, Bornite, Enargite and other sulfide ore species. Furthermore, it relates to the process of preparation of said reagent

**DESCRIPTION OF PRIOR ART**

The experience at heap leaching plants for copper oxides having nitrate salts in their reservoirs, has shown that sulfuric acid consumption is generally much lower than budgeted by design, (acid consumption <60%), when nitrate levels have remained high in the reservoir.

The concern of copper producers was focused on the damage generated by the presence of nitrate in the solvent extraction and electrowinning stages, rather than on the economic benefits achieved in the leaching stage for sulfuric acid savings. Different mixtures of reagents were used in the extraction stages to ensure appropriate extraction and re-extraction efficiency. Likewise, lower doses of "guard" additive in electrowinning allowed to control the issue of premature degradation of this polysaccharide by action of ion nitrates, resulting in massive formation of stripes over the cathodes. This issue appeared frequently in plants where the control of impurity carryover from solvent extraction was not completely efficient and nitrate levels in the cell electrolyte exceeded 50 ppm.

The phenomenological analysis of the problem associated with nitrates in leach liquors of copper oxide plants, and the applicant's industrial experience, indicate that the presence of nitrate ions in the leaching and electrowinning circuits are beneficial as long as there is an appropriate control in the different aqueous solutions generated or used in the process.

Therefore, it is interesting to point out the chemical properties of nitrates as compared to sulfates. At equal ion mobility, from the perspective of electrical neutrality, for each sulfate anion there are two nitrate ions to neutralize a cationic species, for example the cupric ion, but with a great chemical difference: nitrates are one hundred percent soluble; however, not all nitrates are soluble. This is the big difference that explains why the presence of nitrate salts in reservoirs is so beneficial. Additionally, this explains the low consumption rate of sulfuric acid required during leaching, when the reservoir contains nitrate salts.

In the matter of heap leaching of metal sulfides, it is highly desirable to apply the experience obtained from copper oxide leaching to the copper sulfide leaching, based on the following premise:

Heap leaching of mixed ores and secondary copper sulfides uses water, sulfuric acid and bacteria to dissolve the useful species. Bacterial leaching is essentially based on the ability of microorganisms to oxidize the iron (II) content in refining solutions to iron (III) as a result of their metabolic process. Finally, in bacterial leaching of copper sulfides and mixed ores, the electrochemical couple $Fe^{+3}/Fe^{+2}$ is responsible for generating the Redox conditions for the galvanic cell to benefit the dissolution of useful species electrochemically and not chemically as in leaching of copper oxides. Thus, microorganisms catalyze through their metabolic process the passage from iron (II) to iron (III), regenerating the reagent useful to leaching. It is important to bear in mind that the electrochemical system $Fe^{+3}/Fe^{+2}$ is reversible and therefore, the oxide-reduction kinetics is very fast on many conductive substrates.

This process that appears to be very efficient and simple depends, to a large extent, on the concentration of bacteria in heaps and the bacterial activity which, in turn, depends on climatic factors, such as temperature, acidity, air pressure, passivating chemicals, etc., and of the "chemical" environment characterizing the heap structure at a plant.

Chilean patent CL43295 assigned to Jaime Arias discloses a method for extracting copper or other metals from sulfide ores, neither adding GOX to the ore nor producing NOx, characterized in that the method includes the following steps:

- Crushing the ore to a size smaller than 0.006 [m];

- Treating such ore with concentrated sulfuric acid to agglomerate the fine particles and impregnate ore with acid;

- Stacking of treated ore in a heap of less than 12 [m] high

- Irrigating this heap with dilute aqueous solution essentially consisting of sulfuric acid and sodium nitrate to obtain the leaching product;

• Collection of this leaching product from that heap; and

• Recovery of metal from that leaching product by electrolysis to obtain the depleted leach.

This patent claim is restricted to sulfide leaching using sodium nitrate and not to the preparation of a reagent to be used in leaching.

The research study conducted by M. C. Fuerstenau, C. O. Nebo, B. V. Elango, and K. N. Han, entitled The Kinetics of Leaching Galena with Ferric Nitrate, studied the leaching rate of a sulfide ore, i.e. galena, adding ferric nitrate 0.25 [mol/L]. The study does not show how to obtain the ferric nitrate.

The United States patent US 4649029A1 assigned to Inderjit Nidrosh, discloses a method for extracting uranium and radium from sulfide ores, incorporating ferric nitrate in the leaching process, without mentioning how to obtain it. The work is characterized by the following steps:

• Crush the ore finely to remove the sulfide therefrom.

• Leach the finely ground ore with aqueous acidic ferric nitrate solution on a concentration range of 0.01 to 0.1 [mol / L] for the removal of uranium and radium.

• Separate uranium and radium from the resulting leaching solution.

• Recover the ferric nitrate, uranium and radium from the leached ore.

**BRIEF DESCRIPTION OF THE INVENTION**

In order to make the external factors of bioleaching at least partially independent, the bacterial activity was replaced by a process generating a soluble and stable reagent in neutral waters, acid waters and in processing solutions, to help the oxidation and leaching of copper sulfides and other sulfide ores. This reagent is a concentrated aqueous ferric nitrate solution ($Fe(NO_3)_3$) that must be added with some dilution to the leach liquor. Upon incorporation of this reagent, there appear two fundamental ions for copper sulfide leaching: iron (III) and nitrate. Iron (III) is of vital importance for electrochemical leaching of copper sulfides, generating iron (II) product to pass to the aqueous solution. Additionally, the nitrate ions are used to regenerate iron (III). Indeed, the nitrate ions impose strong oxidizing conditions (high Potential Redox) to the aqueous solution, making iron (II) unstable, and this also inhibits the precipitation of ore species like jarosites, thus impairing the recovery and kinetics of copper leaching. Consequently, they spontaneously oxidize to iron (III), restoring in-situ Redox conditions for the aqueous solution to reestablish the leaching cycle.

This invention is primarily intended to provide an integrated process for the production of a ferric nitrate reagent, which is added to the copper leaching process without altering the iron concentration and its overall mass balance in the leach process. The second objective is to provide a highly-pure ferric nitrate reagent to be used in ore leaching.

DESCRIPTION OF THE DRAWINGS

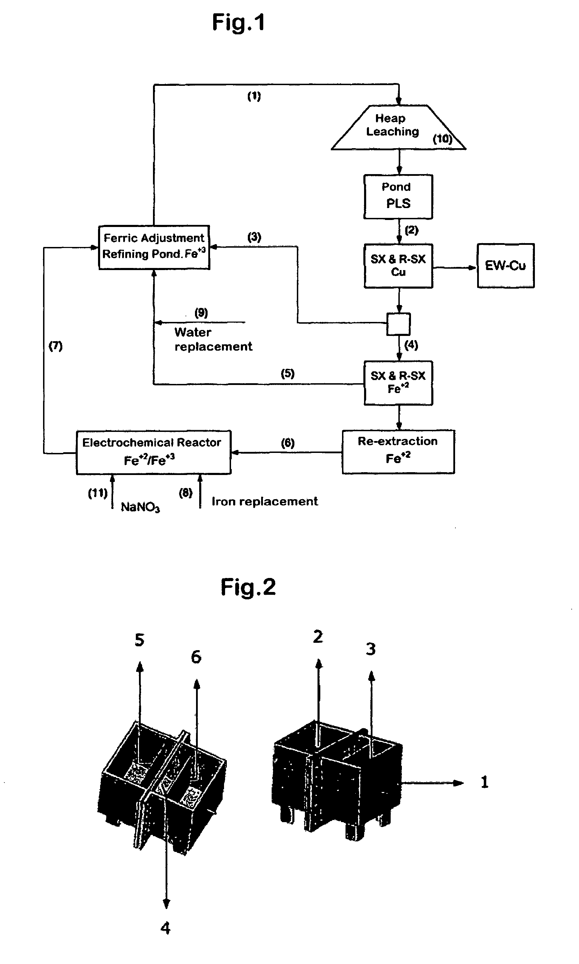

FIGURE 1: Flow chart of the ferric nitrate production process, integrated to copper hydrometallurgical production. The process shown in the flow chart is particularly effective for recovering copper from copper sulfide ores. The chart includes the step of reagent preparation for the invention. Iron replacement is an optional step of the process that takes place only if the amount of iron in the refming solution is insufficient to obtain an iron concentration above 100 [g/L] when entering the reactor.

Description of Currents

(1) Leaching solution with ferric nitrate adjusted to iron (III) concentration according to the characteristics of each process and requirements for a specific copper ore.

(2) PLS rich in copper, iron and nitrate ions.

(3) Electrolyte poor in copper to Ferric Adjustment Refming Pond.

(4) Refming solution to concentration stage (optionally through extraction by solvent of iron ions or by other concentration procedure).

(5) Electrolyte poor in copper to Ferric Adjustment Refming Pond.

(6) Electrolyte concentrated iron to electrochemical reactor to transform iron (II) into ferric nitrate.

(7) Electrolyte concentrated in ferric nitrate to Refining Adjustment Pond of Ferric.

(8) Iron replacement.

(9) Water replacement.

(10) Heap leaching solution considered as iron losses by impregnation.

(11) Sodium nitrate flow to electrochemical reactor.

FIGURE 2: Electrochemical reactor used for transformation and oxidization of iron (II) ion, with the following features:

- Electrochemical Reactor (1) with two compartments (2 and 3) separated by membrane (4).

- Membrane (4). The features of this physical separator are as follows: perfluorinated membrane model 324 Nafion by DUPONT or similar

- Anode (5): DSA mesh or similar. This electrode corresponds to a Titanium mesh covered by Titanium oxides and Ruthenium or Iridium oxides, as catalysts for anodic reactions.

- Cathode (6): High-purity Nickel mesh.

FIGURE 3: Lengthwise section of the pilot cell, electrode distribution , membrane location and electrical connection within the reactor.

FIGURE 4: Reagent generation with $Fe^{+3}$ and $Fe^{+2}$ established concentrations

## DETAILED DESCRIPTION OF THE INVENTION

The mining, and mainly copper, industry needs a new process to generate a reagent with high chemical dissolution and high oxidizing power, to ensure greater copper (II) recovery in the leaching process of metal sulfides, mainly primary copper sulfides.
The present invention meets such goal, by contacting the aqueous stream of a processing solution containing iron (II), of low oxidation potential, with the energetic reagent prepared according to the invention, thus obtaining a leaching solution with greater oxidizing potential, not altering the global balance of total iron in the leaching process.
The reagent resulting of the new process has the following properties:

High Chemical Dissolution Power

The reagent is a ferric nitrate ($Fe(NO_3)_3$) aqueous solution, the concentration of which varies according to the process needs, to maximize the copper dissolution. This ensures one hundred percent solubility in the aqueous solution, due to its nitrate-based salt formula (NO -). The nitrate anion is in fact a very potent chemical agent inhibiting the precipitation of chemical compounds sensitive to decreasing the leaching kinetics of copper sulfides.
Table 1 shows the solubility of certain nitrates and sulfates in water at 20 [°C]:

Table 1: Water solubility at 20 [°C] of certain nitrates and sulfates.

|  | $NO_3^-$ [g/L] | $(SO_4)^{-2}$ [g/L] |
|---|---|---|
| Barium (II) | 92 | < 0.01 |
| Calcium (II) | 1293 | 1.90 |
| Copper (II) | 1251 | 207.00 |
| Iron (II)* | 87.5 | 3.00 |

(continued)

|  | NO$_3^-$ [g/L] | (SO$_4$)$^{-2}$ [g/L] |
|---|---|---|
| Iron (III) | Highly | Soluble |
| Silver (I) | 2220 | 7.96 |
| Potassium (I) | 316 | 111.00 |
| Sodium (I) | 880 | 194.00 |
| Source: The Chemical Engineering Handbook (Manual del Ingeniero Quimico), VI Edition. * CRC Handbook of Chemistry and Physics, XC Edition. Water solubility at 25 [°C] | | |

Based on the data in Table 1, it is noted that for salts consisting of the same cations, nitrates are remarkably more soluble, as compared to sulfates.

High Redox Potential

The reagent is a very powerful oxidant due to the presence of nitrate ion and high iron (III) concentration, resulting in a high redox potential. If the oxidizing properties of the reagent were attributable only to the high ferric ion concentration, the redox potential should not exceed 770 [mV/ESH]. In this respect, the presence of nitrate ion is remarkable, since it increases the potential redox of the solution and helps to make the iron (III) more stable, since its natural tendency is to the Redox couple $Fe^{+3}/Fe^{+2}$, an electrochemical couple of reversible kinetics, i.e., quick kinetics controlled by diffusion, thus granting it the property of a greater oxidizing power according to the ferric ion concentration present in the reagent.

The reagent produced in a highly concentrated HNO$_3$, aqueous solution ensures a redox potential higher than 850 [mV / Ag / Ag Cl] according to Table 4.

Sources of Ferrous Ion Solutions

*From refining solutions*: The main utility of the invention is the use of ferrous sulfate iron, naturally present in the refining solution to transform it into leach solution, not having to resort to additional reagents, and this, in turn, reduces operational costs.

*From metal iron*: If the copper ore to undergo the leaching process does not have the iron (II) concentration required to sustain such process, as stated in this invention, it needs to be incorporated by means of an external iron (II) supply, for example, by leaching iron dust, metal iron or iron ore pellets with sulfuric acid. Iron dissolves into dilute mineral acids and if they are non-oxidizing acids, ferrous ion is obtained in absence of air. If the iron is in the presence of air and not too hot dilute nitric acid is used, a portion of it is transformed into iron (III).

The ferrous sulfate is prepared by making dilute sulfuric acid react to iron dust, metal iron or iron ore pellets. Under these reducing conditions, the only result is ferrous salt, according to the following reaction:

$$Fe \; + \; H_2SO_4 \; \rightarrow \; FeSO_4 \; + \; H_2 \uparrow \quad (1)$$

Concentration of Ferrous Ion

Increasing the iron (III) concentration from copper refining solutions is intended to decrease the volumetric solution flow entering the reactor to produce ferric nitrate. This enables to reduce: the size of the reactors, as well as the design and operation costs in this phase of the process. The stage for concentration is neither limiting nor essential to the process of reagent preparation; however, the concentration is made alternatively, but preferably, by using the traditional solvent extraction method for copper, with the difference that the extracting agent is selective for iron (II).

Other methods to concentrate iron (II) can also be used, such as precipitation of Fe (OH)2 or using ionic exchange membranes.

It is possible to concentrate iron by alternatively using an organic phase of Di-(2-ethylhexyl) phosphoric acid (HDEHP) dissolved in kerosene, according to the following reaction:

$$Fe_{(A)}^{+2} \; + \; 2(HX)_{2(O)} \;\; \rightarrow \;\; FeX_4H_{2(O)} \; \div \; 2H_{(A)}^{+} \qquad (2)$$

Where (HX) is HDEHP, (A) refers to the aqueous phase and (O) to the organic phase.

Experimental tests were conducted to check the extraction of iron, using HDEHP as extracting agent and kerosene as diluent. A solution is prepared in the following concentrations: 4.15 [g/L] of iron, 0.5 [g/L] of copper and 12 [g/L] of sulfuric acid. The aqueous phase was mixed with the organic phase varying the agitation time to extract the iron from the aqueous phase. The results are shown in Table 2:

Table 2: Extraction of iron using an organic solution: 1:1 of HDEHP and kerosene.

| Contact Time | Iron [g/L] Aqueous Phase | Iron [g/L] Organic Phase | Percentage of Iron Organic Phase |
|---|---|---|---|
| 10 minutes | 3.67 | 0.48 | 11.6 |
| 50 minutes | 2.72 | 1.43 | 34.4 |
| 100 minutes | 2.67 | 1.48 | 35.7 |

The results indicate it is possible to extract iron in the organic phase with an efficiency superior to 35 percent, in a single step.

Iron is re-extracted from the organic phase loaded by contact with a mineral acid concentrate according to the following reaction:

$$FeX_4H_{2(O)} \; + \; 2H_{(A)}^{+} \;\; \rightarrow \;\; Fe_{(A)}^{+2} \; + \; 2(HX)_{2(O)} \quad (3)$$

Re-extraction of iron was performed from the organic phase to the aqueous phase using hydrochloric acid (HCl) and sulfuric acid ($H_2SO_4$), both in 3 [m/L] concentrations; the results are shown in Table 2.1 and Table 2.2:

Table 2.1: Re-extraction of iron in organic phase with 0.1 [L] of HCl 3 Molar:

| Contact Time | Iron [g/L] Aqueous Phase | Iron [g/L] Organic Phase | Percentage of Iron Aqueous Phase |
|---|---|---|---|
| 600 [s] | 0.0248 | 0.4552 | 5.2 |
| 3,000 [s] | 0.0600 | 1.3700 | 4.2 |
| 6,000 [s] | 0.0845 | 1.3955 | 5.7 |

Table 2.2: Re-extraction of iron in organic phase with 0.1 [L] of $H_2SO_4$ 3 M:

| Contact Time | Iron [g/L] Aqueous Phase | Iron [g/L] Organic Phase | Percentage of Iron Aqueous Phase |
|---|---|---|---|
| 600 [s] | 0.0008 | 0.4792 | 0.17 |
| 3,000 [s] | 0.0120 | 1.4180 | 0.84 |
| 6,000 [s] | 0.0326 | 1.4474 | 2.20 |

The results indicate that re-extraction with HCl is more favorable than with $H_2SO_4$, and according to reaction 4, the re-extraction rates grow by increasing acidity in this phase.

There is an option to get the copper refining solution in contact with nitric acid, after extraction by iron solvent. The iron failing to complete its oxidation to Fe (III), after the solvent extraction step, must enter the electrochemical reactor to meet this objective.

Electrolytic Transformation of Iron (II) to Iron (III).

The process of iron (III) production by oxidation of iron (II) from iron (II) concentrated aqueous solutions is sustained by the use of membrane cell technology, used more than two decades ago in the production of chlorine ($Cl_2$) and soda (NaOH) by brine electrolysis, a process leading to the manufacture of $Cl_2$, NaOH and $H_2$.

Slightly alkaline water is supplied to the Catholyth, while supplying a concentrated solution of iron (II) and a concentrated solution of sodium nitrate (NaNO$_3$) to the Anolyth. Iron (II) highly concentrated solutions (about 100 [g/L]) should be supplied at this point in order to operate with high current densities. This allows the use of smaller electrochemical reactors thus making the technology more luring from the economic standpoint.

From the technological perspective, the applicant has worked at laboratory and semi-pilot scale, in projects using membrane cells. The following set of experiences show the redox potential of ferric nitrate dissolved at different concentrations of nitric acid, with the purpose of incorporating an adequate amount of nitrates to maintain the existence of a potential redox high enough to be used in leaching.

The results obtained in the synthesis of the reagent, from commercial iron shavings, except for M$_6$, performed with discard steel wool, is shown in Table 3:

Table 3: Synthesis of ferric nitrate from a solution of iron (II) and nitric acid.

| Sample | HNO$_3$ [g//L] | +2 Fe [g/L] | +3 Fe [g/L] | Final Potential Redox [mV/ Ag/ AgCl] | Transformation Efficiency |
|---|---|---|---|---|---|
| M$_0$ | Drops | 0.2 | 0.01 | 520 | 5.0 % |
| M$_2$ | 200 | 40.6 | 34.30 | 525 | 84.5 % |
| M$_4$ | 300 | 21.6 | 20.30 | 740 | 94.0 % |
| M$_5$ | 400 | 32.5 | 30.50 | 856 | 93.8 % |
| M$_6$ | 400 | 32.4 | 23.60 | 862 | 72.8 % |
| M$_6$ obtained from discard steel wool | | | | | |

Experiences made in the electrochemical membrane reactor resulted in the reagent for which a patent is applied, with the following characteristics, stated in Table 4:

- A solution rich in ferric nitrate, Fe (NO$_3$)$_3$, obtained by oxidation of aqueous solution from copper refining, by adding HNO$_3$, NaNO$_3$ and Fe$^{+2}$, for balance and requirement.

- Redox Potential of the reagent for which a patent is applied is always above 770 [mV/ESH]

Table 4: Synthesis of ferric nitrate in membrane electrochemical reactor.

| Sample | Total Fe [g/L] | pH | Fe$^{+3}$ / Total Fe | Potential Redox [mV / ESH] |
|---|---|---|---|---|
| M$_0$ | 01 | 2.3 | 25% | 490 |
| M$_2$ | 30 | 0.3 | 99% | 784 |
| M$_4$ | 40 | 0.2 | 99% | 820 |
| M$_5$ | 50 | 0.2 | 99% | 940 |
| Important note: Bear in mind that E$_0$ from the Fe$^{+3}$ / Fe$^{+2}$ system is 770 [mV / ESH]. | | | | |

The tables show that greater nitric acid and iron (II) concentrations result in highly concentrated iron (III) solutions, with potential redox exceeding 850 [mV/ Ag/ AgCl], i.e., above 1000 [mV / ESH]. This encourages a reagent with high oxidizing power to be used in oxidation reactions, and therefore, it results a very powerful reagent to favor the leaching of metal sulfides.

EXAMPLES

Figure 1 shows a flow chart according to the first mode of this invention, where the production process of ferric nitrate reagent is integrated to the hydrometallurgical production of copper.

The process shown in the flow chart is particularly effective to recover copper from a copper sulfide material; the chart includes the in-situ reagent preparation for the invention. The incorporation of iron is an optional step of the process and it takes place only if the amount of iron in the refining solution is insufficient to obtain an iron (II) concentration above 100 [g/L] when entering the reactor.

Figure 2 shows the electrochemical reactor used for iron (II) transformation and oxidization, with the following specifications:

• Electrochemical Reactor (1) with two compartments (2 and 3) separated by membrane (4).

• Membrane (4): perfluorinated membrane model 324 Nafion by DUPONT, or similar.

• Anode (5): DSA mesh, or similar. This electrode corresponds to a Titanium mesh covered by Titanium oxides and by Ruthenium or Iridium oxides, as catalysts for anodic reactions.

• Cathode (6): High-purity Nickel mesh.

Table 5 shows some features and advantages of the electrodes and membrane used in the electrolysis cell.

Table 5: Features and advantages of the electrodes and membrane used in the reactor.

| Material | Features | Advantages |
|---|---|---|
| Anode | • Dimensionally Stable Anode (DSA). <br> • Large surface electrodes. <br> • Titanium mesh, coated with a mixture of Titanium oxides and noble metals (Ru, Ir) <br> • A change of coating must be considered from time to time, according to operation conditions. <br> • Low specific energy consumption, due to the decrease in the overvoltage of iron (II) oxidation. | • Dimensionally stable and non-consumable, thus allowing the operation at high flow densities. The coating has an estimated 3- year service life . <br><br> • Light weight. <br> • Improves electrolyte recirculation due to its mesh shape. <br><br> • The average inter-electrode distance decreases, thus favoring the energy consumption. |
| Cathode | • Nickel Meshes. <br> • Nickel 200- 99% Ni minimum content - ASTM B160 Standard. <br> • Long duration under operation conditions. | • Effective catalyst of water reduction reaction. Good chemical stability. Relative low cost |
| Membrane | • Thin polymer film, commonly reinforced with a support string on the Teflon base. <br> • Requires expansion pretreatment before energizing. <br> • Allows working under high acidity conditions of the medium. | • Permeable to the passage ofNa+ ions from Anolyth to Catholyth <br><br> • Waterproof to other cations or anions and to non-polar compounds |

Under these conditions, and when supplying an electrical current that generates a difference of potential between electrodes, iron (II) to (III) oxidation reactions may occur in the anode, as well as water reduction in the cathode and migration of the sodium ion from Anolyth to Catholyth, to close the electrical circuit of the system. The circulating current will generate the following electrochemical reactions:

Reactions in the Catholyth

Water Reduction: $H_2O + 1e^- \rightarrow y_2H_2 + OH^-$      $E = -0{,}83 \ [V/ESH]$

Soda Production: $Na^- + OH^- \rightarrow NaOH$

Reactions in the Anolyth

Ferrous Ion Oxidation : $Fe^{+2} \rightarrow Fe^{+3} + 1e^-$      $E^0 = -0,76$ [V/ESH]

A feature of the invention is that the following anodic reaction will not occur:

$$2H_2O \rightarrow O_2 + 4H^+ + 4e^- \qquad E^\theta = -1,23 \text{ [V/ESH]}$$

Since this reaction is thermodynamically possible, it should be avoided, to maximize the oxidation of iron (II). Therefore, the concentration of iron (II) entering the Anolyth must be controlled, i.e., highly concentrated iron (II) solutions must be supplied.

The dimensions of the electrochemical reactor used for these tests are as follows:

| | |
|---|---|
| DSA anode geometric area | : 0.5 [m²] |
| Nickel cathode geometric area | : 0.5 [m²] |
| Barriers Height | : 0.97[m] |
| Membrane geometric area | : Slightly less than 0.5 [m²] |

The process to prepare the chemical reagent of the invention, which is soluble in neutral and acid waters and in processing solutions for oxidation and leaching of copper sulfides and other sulfide ore species, comprises the following steps:

a) Taking part of an aqueous processing stream containing iron (II) ions;

b) Concentrating the aqueous current in iron (II) alternatively by solvent extraction;

c) Oxidizing ferrous nitrate to ferric nitrate;

d) Obtaining an aqueous current concentrated in ferric nitrate;

e) Collecting or retaining to dose in the amount required by the leaching process.

The aqueous solution to be concentrated may correspond to: portion of the refining from the copper extraction step and alternatively, to a flow of pregnant leaching solution.

The transformation and concentration occur simultaneously in an electrolytic membrane cell.

In case the copper leaching process does not generate the sufficient and necessary iron amount, it can be directly added to the supply flow to the electrolytic cell. This addition may correspond to a solution from an oxidation process of metal iron with sulfuric acid or, optionally, with iron ore pellet.

Storage takes place in a retention tank.

The process to prepare the reagent is performed in a system comprising the following media:

i) One or more solvent extraction trains, a pond to precipitate Fe(OH)2 or a membrane cell to concentrate iron (II) ions from the aqueous stream;

ii) An electrolytic membrane cell to incorporate a sodium nitrate solution and a concentrated iron (II) solution in the anodic section to oxide and transform the concentrated iron (II) solution to ferric nitrate;

iii) A storage tank to contain concentrated ferric nitrate;

iv) An adjustment pond to clarify the ferric nitrate aqueous solution;

v) A pump or other medium to distribute and dose ferric nitrate solution in the supply flow to the heap leaching.

The preferred medium to concentrate an aqueous solution corresponds to a solvent extraction circuit as indicated in Figure 1, specific to concentrate iron (II) from the stage of copper solvent extraction, including extraction and re-extraction steps. The solution coming from solvent extraction of iron (II), concentrated and enriched in iron (II), enters a stage of oxidation and transformation in trains of electrolytic membrane cells, arranged in parallel to obtain a concentrated ferric nitrate solution with high oxidizing power. The concentrated ferric nitrate solution is retained in a contention medium to be later distributed and dosed in the leaching flow entering the leaching heaps. Generally, this distribution and dosage takes place in the Refming Adjustment Pond.

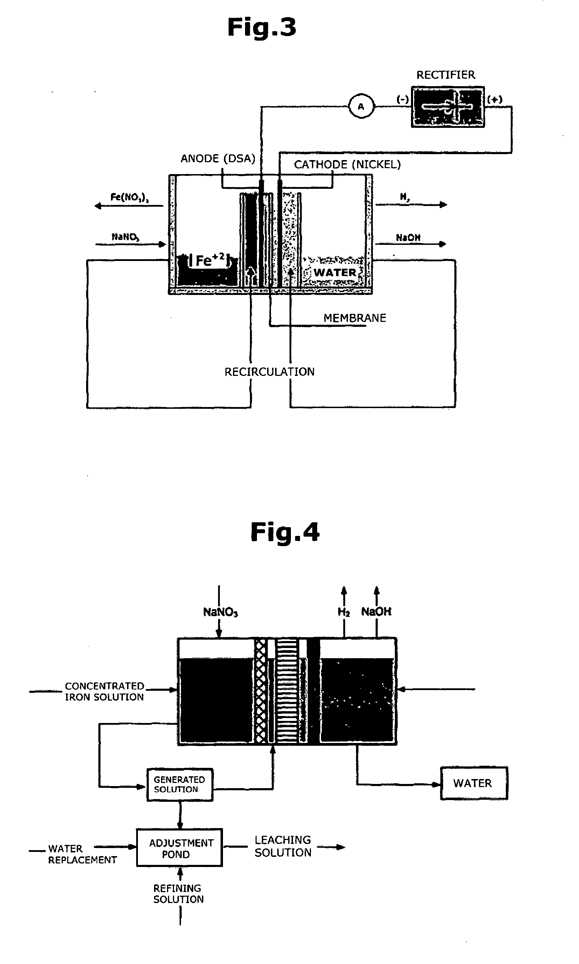

Examples 1, 2 and 3, Table 6 and Figure 4 provide a detail of the methodology used for the design of operational variables controlling the production of the reagent of the invention, with established concentrations of iron (III) and iron (II).

Table 6: Operation Variables of Figure 2.

| EXAMPLE | | | 1 | 2 | 3 |
|---|---|---|---|---|---|
| Concentrated Solution in | Flow | [L /h] | 4 | 4 | 9 |
| | Initial $Fe^{+2}$ | [g / L] | 100 | 100 | 100 |
| Generated Solution | Final $Fe^{+2}$ | [g / L] | 60 | 21 | 60 |
| | Final $Fe^{+3}$ | [g / L] | 40 | 79 | 40 |
| Refining Solution | Flow | [L / h] | 81 | 81 | 76 |
| | $Fe^{+2}$ | [g / L] | 1.5 | 1.5 | 1.5 |
| | $Fe^{+3}$ | [g / L] | 1.0 | 1.0 | 1.0 |
| Leaching Solution | Flow Table 6: | [L / h] | 85 | 85 | 85 |
| | $Fe^{+2}$ | [g / L] | 4.5 | 2.5 | 7.5 |
| | $Fe^{+3}$ | [g / L] | 3.0 | 5.0 | 5.0 |
| Reactor Parameters | I | [A / m$^2$] | 470 | 470 | 470 |
| | TI $_{stream}$ | % | 85 | 85 | 85 |
| | CONVERSION$^{+2 +3}$ | % | 40 | 79 | 40 |
| | Anode $^{Area}$ | [m$^2$] | 1.25 | 1.25 | 1.25 |
| | $Fe^{+3}$ Generated | [G] | 1.395 | 2.755 | 2.790 |
| Recirculation Time | | [h] | 1.34 | 2.64 | 2.68 |
| NaNO$_3$ | | [g / L] | 456 | 456 | 456 |

- Solution Rich in Iron (II): pregnant solution in iron (II) entering the electrochemical reactor, to be transformed into a highly concentrated ferric nitrate solution.

- Generated Solution: Highly concentrated ferric nitrate solution leaving the reactor.

- Leaching Solution: Solution leaving the Refming Adjustment Pond, with the ferric nitrate concentration required for each leaching process.

For these examples it is established that the leaching time is 8 hours with a rate of 85 [L / h] to obtain a net volume of 680 [L] leaching solution.

According to the iron (III) levels required for the column leaching tests of a sulfide ore, bases are submitted for the design of the electrochemical reactor which controls the following operational variables of the process:

- Estimated duration for leaching tests: 8 hours.

- Net volume of leaching solution: 85 [L/h] * 8 [h] = 680 [L].

Once the concentrations of iron (II) and iron (III) in the initial solution and leaching solution are known, the initial solution flows, as well as the flow to be generated in the electrochemical reactor, are determined by mass balance, so as to obtain the leaching solution conditions required in each case.

The operating system of the reactor will depend on the leaching process requirements, namely, whether the system is continuous or batch, thus allowing to generate iron (III) in a determined volume which, added to a certain volume of initial solution, may generate each of the solutions required for column leaching.

The iron (II) solution added to the electrochemical reactor is about 10 to 500 [g/L], a concentration sufficient to ensure an operation at current density between 450-500 [A/m$^2$]. This concentrated iron (II) solution could correspond to the aqueous solution leaving the extraction step by iron solvent, which should be considered a clarification phase if required by the process.

In the three examples, a highly concentrated iron (III) solution is produced in the anolyth of the reactor, with a 100 [g/L] concentration of total iron, which is combined with the refining solution so as to reach the oxidizing conditions required for ore leaching. In the cathodic compartment Na Oh highly concentrated alkaline water is generated, which can be stored and subsequently used in other plant processes.

The process net current and specific energy consumption for the three cases is as follows:

| | |
|---|---|
| Process Net Current: | 587 [A] |
| Specific Energy Consumption: | 2253 [kWh/Ton]* |
| *Expressed in kWh per ton of generated Fe (NO$_3$)$_3$. | |

Experimental tests conducted at a laboratory showed that the voltage drop between anode and cathode decreases if the system is not in optimal agitation and lacks an adequate concentration of iron (II) entering the anolyth. This variable can be controlled by supplying an adequate flow level in the anode compartment. The flow level to be applied is variable and should be checked during the tests, thus monitoring the cell potential.

**Claims**

1. Process to prepare a chemical reagent soluble in neutral waters, acid waters and in processing solutions to assist and improve oxidation and leaching of copper sulfides and other sulfide ore species, **CHARACTERIZED in that** it comprises the following steps:

    i) Taking part of an aqueous stream of a processing solution that contains iron (II);
    ii) Concentrating the aqueous stream in iron (II) ions;
    iii) Oxidizing and transforming the iron (II) concentrated aqueous stream to a ferric nitrate solution;
    iv) Obtaining an aqueous stream concentrated in ferric nitrate and with high redox potential;
    v) Storing the concentrated ferric nitrate solution to dose it in the copper leaching process, according to the oxidizing requirements for such leaching process.

2. The process according to claim 1, **CHARACTERIZED in that** the aqueous stream corresponds to the refining solution of an extraction stage by copper solvent.

3. The process according to claim 1 **CHARACTERIZED in that** the aqueous stream corresponds to the copper leaching rich solution.

4. The process according to claim 1, **CHARACTERIZED in that** alternatively the iron (II) concentrated aqueous stream corresponds to the product of oxidizing metal iron with sulfuric acid.

5. The process according to claim 1, **CHARACTERIZED in that** the oxidation stage of iron (II) to iron (III) is performed in an electrolytic cell.

6. The process according to claim 1, **CHARACTERIZED in that** the electrolytic cell is an electrolytic membrane cell.

7. The process according to claim 1, **CHARACTERIZED in that** in the oxidation stage to produce ferric nitrate, sodium nitrate is used as source of nitrate ions.

8. The process according to claim 7, **CHARACTERIZED in that** for each 100 [g/L] of iron (II) entering the cell, 456 [g/L] of sodium nitrate are required.

9. The process according to claim 1, **CHARACTERIZED in that** the concentration and redox potential of the resulting ferric nitrate solution must be at least 210 [g/L] and above 850 [mV/Ag/Ag Cl] respectively.

10. An inorganic chemical reagent soluble in neutral waters, acid waters and in processing solutions to assist and improve oxidation and leaching of copper sulfide ores and other sulfide ore species, as stated in claim 1, **CHARACTERIZED in that** it contains ferric nitrate as oxidizing and leaching agent with a redox potential above 850 [V/Ag/Ag Cl] .

11. The reagent according to claim 10, **CHARACTERIZED in that** the high redox potential is due to the synergism of nitrate ions together with iron (III) ions.

12. The reagent according to claim 10, **CHARACTERIZED in that** during the leaching of copper sulfides, the nitrate ions maintain a high iron (III) concentration in the solution.

13. The reagent according to claim 10 **CHARACTERIZED in that** it is derived from one or more of the following copper sulfide ores: Chalcopyrite, Covellite, Chalcocite, Bornite and Enargite.

14. A system to prepare a chemical reagent soluble in neutral waters, acid waters and in process solutions to assist and improve the oxidation and leaching of copper sulfides and other sulfide ore species, **CHARACTERIZED in that** it comprises:

> i) a means for concentrating an aqueous stream of iron (II);
> ii) a means for oxidizing ferrous nitrate to ferric nitrate;
> iii) a means for containing concentrated ferric nitrate;
> iv) a means for clarifying the ferric nitrate aqueous solution;
> v) a means for distributing and dosing the ferric nitrate to a heap leaching pile feed stream.

15. The system according to claim 14, **CHARACTERIZED in that** the means for concentrating the aqueous stream of iron (II) is a solvent extraction circuit.

16. The system according to claim 14, **CHARACTERIZED in that** the means for oxidizing the aqueous stream of iron (II) is an electrolytic cell.

17. The system according to claim 16, **CHARACTERIZED in that** the electrolytic cell is a membrane cell.

18. The system according to claim 14, **CHARACTERIZED in that** the means for containing the concentrated ferric nitrate is a pond.

19. The system according to claim 14, **CHARACTERIZED in that** the means for distributing the concentrated solution is a dosing pump.

20. A process for heap leaching of copper sulfides and other sulfide ore species comprising comprises the incorporation of a ferric nitrate chemical reagent soluble in neutral waters, acid waters, and processing solutions into the solution which irrigates a heap leaching pile in order to assist and improve the oxidation and leaching of copper sulfides and other sulfide ore species.

21. The process according to claim 20, **CHARACTERIZED in that** during the leaching process of copper sulfide ores and other sulfide ore species with ferric nitrate, the nitrate ions ensure a high iron (III) concentration.

22. The process according to claim 20, **CHARACTERIZED in that** during the leaching process of copper sulfide ores and other sulfide ore species with ferric nitrate, the nitrate ions ensure a high redox potential of the leaching solution.

23. The process according to claim 22, **CHARACTERIZED in that** the high redox potential is due to the product synergism of nitrate ions together with iron (III) ions.

24. The process according to claim 22, **CHARACTERIZED in that** such high potential redox is above 850 [V/Ag/Ag Cl].

25. The process according to claim 20, **CHARACTERIZED in that** the copper sulfide ores correspond to Chalcopyrite, Covellite, Chalcocite, Bornite and/or Enargite and other sulfide ore species.

26. The process according to claim 20, **CHARACTERIZED in that** during the leaching process of copper sulfide ores and other sulfide mineral species with ferric nitrate, the nitrate ions ensure a reduction in the rate of jarosite precipitation.

# Fig.1

# Fig.2

# Fig.3

# Fig.4

# INTERNATIONAL SEARCH REPORT

International application No.

PCT/CL2012/000022

### A. CLASSIFICATION OF SUBJECT MATTER

*C22B15/00* (2006.01)
*C22B3/06* (2006.01)
According to International Patent Classification (IPC) or to both national classification and IPC

### B. FIELDS SEARCHED

Minimum documentation searched (classification system followed by classification symbols)

C22B

Documentation searched other than minimum documentation to the extent that such documents are included in the fields searched

Electronic data base consulted during the international search (name of data base and, where practicable, search terms used)

EPODOC, INVENES, WPI, XPESP

### C. DOCUMENTS CONSIDERED TO BE RELEVANT

| Category* | Citation of document, with indication, where appropriate, of the relevant passages | Relevant to claim No. |
|---|---|---|
| A | WO 2005005672 A1 (MINTEK ET AL.) 20/01/2005, page 7, line 14 - page 10, line 11. | 1-26 |
| A | PASHKOV, G.L. et al. "Effect of potential and ferric ions on lead sulfide dissolution in nitric acid". Hydrometallurgy 63 (2002) 171-179. | 1-26 |
| A | CA 1241544 A1 (NIRDOSH INDERJIT ) 06/09/1988, page 7, lines 1 - 10. | 1-26 |
| A | SU 981413 A1 (INST KHIM AN UZSSR ) 15/12/1982, abstract; [on line] [retrieved on 11.10.2012] Abstract from DataBase WPI. Retrieved from EPOQUE | 1-26 |

☐ Further documents are listed in the continuation of Box C.        ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
|---|---|
| 16/10/2012 | **(22/10/2012)** |

| Name and mailing address of the ISA/ | Authorized officer |
|---|---|
| | B. Aragón Urueña |
| OFICINA ESPAÑOLA DE PATENTES Y MARCAS Paseo de la Castellana, 75 - 28071 Madrid (España) Facsimile No.: 91 349 53 04 | Telephone No. 91 3493277 |

Form PCT/ISA/210 (second sheet) (July 2009)

## INTERNATIONAL SEARCH REPORT

Information on patent family members

International application No.

PCT/CL2012/000022

| Patent document cited in the search report | Publication date | Patent family member(s) | Publication date |
|---|---|---|---|
| WO2005005672 A | 20.01.2005 | CA2532999 A | 20.01.2005 |
| | | AU2004256295 A | 20.01.2005 |
| | | AU2004256295 B | 01.09.2011 |
| | | MXPA06000544 A | 30.03.2006 |
| | | EP1644542 AB | 12.04.2006 |
| | | EP20040743931 | 14.07.2004 |
| | | CN1846003 A | 11.10.2006 |
| | | CN100417733 C | 10.09.2008 |
| CA1241544 A | 06.09.1988 | NONE | |
| SU981413 A | 15.12.1982 | NONE | |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4649029 A1

**Non-patent literature cited in the description**

- Source: The Chemical Engineering Handbook. Manual del Ingeniero Quimico

- CRC Handbook of Chemistry and Physics. Water solubility